# EUROPÄISCHE PATENTSCHRIFT

(11) **EP 4 353 635 B1**
(45) Veröffentlichungstag und Bekanntmachung des Hinweises auf die Patenterteilung: **16.07.2025**
(21) Anmeldenummer: 22201525.7
(22) Anmeldetag: 14.10.2022
(51) Int. Cl.: B65G 23/02, E02D 27/44

(54) **BODENPLATTEN-FUNDAMENTSYSTEM**
FLOOR PLATE FOUNDATION SYSTEM
SYSTEME DE FONDATION DE DALLE DE SOL

(43) Veröffentlichungstag der Anmeldung: 17.04.2024
(73) Patentinhaber: Sommer Anlagentechnik GmbH, 84051 Altheim (DE)
(72) Erfinder: Straßmeier, Alfred, 84028 Landshut (DE)
(74) Vertreter: Böss, Dieter Alexander

(56) Entgegenhaltungen:
- EP-A1- 4 050 160
- US-A1- 2019 329 982

## Beschreibung

Die Erfindung betrifft ein Bodenplatten-Fundamentsystem für Produktionsanlagen mit zu fördernden Paletten, insbesondere Paletten-Umlaufanlage zur Herstellung von Fertigbetonbauteilen, aufweisend wenigstens eine Längsfördereinrichtung, mit mehreren die Paletten in Längsförderrichtung fördernde Laufrollen, welche lediglich in Teilabschnitten jeder Laufrolle über einen Boden nach oben herausstehen, und aufweisend wenigstens eine unter dem Boden angeordnete Querfördereinrichtung mit einem eine jeweilige Palette in Querförderrichtung transportierenden Fahrwagen und einem an dem Fahrwagen höhenverstellbar angeordneten Hubmittel zum Anheben der jeweils zum Transportieren in Querförderrichtung aufzunehmenden Palette, wobei der Boden einen sich über der Querfördereinrichtung in Querförderrichtung erstreckenden Spalt aufweist.

Die EP 4 050 160 A1 beschreibt eine Produktionsanlage, insbesondere Paletten-Umlaufanlage zur Herstellung von Fertigbetonbauteilen, mit wenigstens zwei Fundamentverankerungskästen, aufweisend wenigstens eine in den einen Fundamentverankerungskasten integrierte Längsfördereinrichtung, welche mehrere in Längsförderrichtung fördernde Laufrollen aufweist, die derart in den einen Fundamentverankerungskasten integriert sind, dass lediglich ein Teilabschnitt jeder Laufrolle über eine Oberkante des einen Fundamentverankerungskastens nach oben heraussteht, und aufweisend wenigstens eine in den anderen Fundamentverankerungskasten integrierte Querfördereinrichtung mit einem Fahrwagen und einer auf dem Fahrwagen angeordneten, ausfahrbaren Hubeinrichtung, wobei der Fahrwagen derart in den anderen Fundamentverankerungskasten integriert ist, dass in einem nicht ausgefahrenen Zustand der Hubeinrichtung der Fahrwagen zusammen mit der Hubeinrichtung vollständig in einem Hohlraum des Fundamentverankerungskastens verborgen angeordnet ist. Die Hubeinrichtung umfasst ein Hubmittel, das über einen Spalt im Boden hinweg herausgefahren werden kann, um eine sich oberhalb des Bodens befindende Palette anheben zu können. Die EP 4 050 160 A1 offenbart ein Bodenplatten-Fundamentsystem gemäß dem Oberbegriff des Anspruchs 1.

Aufgabe der Erfindung ist es, bei einem Bodenplatten-Fundamentsystem für Produktionsanlagen mit zu fördernden Paletten, insbesondere bei einer Paletten-Umlaufanlage zur Herstellung von Fertigbetonbauteilen eine verbesserte, insbesondere sicherere Spaltabdeckung zu schaffen.

Die Aufgabe wird gelöst durch ein Bodenplatten-Fundamentsystem für Produktionsanlagen mit zu fördernden Paletten, insbesondere durch eine Paletten-Umlaufanlage zur Herstellung von Fertigbetonbauteilen, aufweisend wenigstens eine Längsfördereinrichtung, mit mehreren die Paletten in Längsförderrichtung fördernde Laufrollen, welche lediglich in Teilabschnitten jeder Laufrolle über einen Boden nach oben herausstehen, und aufweisend wenigstens eine unter dem Boden angeordnete Querfördereinrichtung mit einem eine jeweilige Palette in Querförderrichtung transportierenden Fahrwagen und einem an dem Fahrwagen höhenverstellbar angeordneten Hubmittel zum Anheben der jeweils zum Transportieren in Querförderrichtung aufzunehmenden Palette, wobei der Boden einen sich über der Querfördereinrichtung in Querförderrichtung erstreckenden Spalt aufweist, gekennzeichnet durch eine Spaltabdeckungsvorrichtung, die wenigstens ein umlaufendes Abdeckmittel aufweist, das an dem Spalt derart geführt ist, dass ein oberhalb des Spaltes verlaufender Abschnitt des Abdeckmittels den Spalt von oben abdeckend auf dem Boden höhenverstellbar aufliegend angeordnet ist und ein unterhalb des Spaltes in Rückführung befindender Abschnitt des Abdeckmittels unter dem Fahrwagen im Umlauf zurücklaufend geführt ist, wobei das höhenverstellbare Hubmittel ausgebildet ist zum Anheben des oberhalb des Spaltes verlaufenden Abschnitts des Abdeckmittels, um diesen vom Boden weg nach oben anzuheben, so dass eine sich über diesen angehobenen Abschnitt des Abdeckmittels positionierte Palette auf dem oberhalb des Spaltes verlaufenden Abschnitt des Abdeckmittels aufliegend durch das Hubmittel angehoben wird.

In einer ersten grundlegenden Ausführung kann die Spaltabdeckungsvorrichtung bzw. das Abdeckmittel mehrere an wenigstens einem umlaufenden Zugmittel seriell hintereinander angeordnete Abdeckplatten aufweisen, die an dem Zugmittel derart geführt sind, dass die sich jeweils in einem oberen Trum des Zugmittels befindenden Abdeckplatten den Spalt von oben abdeckend auf dem Boden höhenverstellbar aufliegen und die sich jeweils im unteren Trum des Zugmittels befindenden Abdeckplatten unterhalb des Fahrwagens in Rückführung befinden, wobei das höhenverstellbare Hubmittel ausgebildet ist zum Anheben mehrerer der im oberen Trum des Zugmittels befindenden Abdeckplatten, um diese vom Boden weg nach oben anzuheben, so dass eine sich über den im oberen Trum des Zugmittels befindenden Abdeckplatten positionierte Palette auf diesen Abdeckplatten aufliegend durch das Hubmittel angehoben wird.

Ein spezielles Bodenplatten-Fundamentsystem für Produktionsanlagen mit zu fördernden Paletten sind Paletten-Umlaufanlagen. Paletten-Umlaufanlagen zur Herstellung von Fertigbetonbauteilen dienen der seriellen Herstellung von Betonbauteilen, wie insbesondere Wände und Decken für Gebäude. Die Paletten-Umlaufanlage transportiert die jeweiligen Paletten von einer Bearbeitungsstation zur nächsten Bearbeitungsstation. Jede Palette dient als eine Plattform zur liegenden Fertigung von beispielsweise Betonwänden oder Betondecken. Eine jeweilige Palette kann einen Schalungsrahmen tragen, welcher eine Form bildet zum Vergießen mit Frischbeton, um die zu fertigenden Betonwände und Betondecken zu schaffen.

In einer Paletten-Umlaufanlage werden die Paletten in einer Hauptförderrichtung transportiert, welche eine Längsförderrichtung bildet. Die Längsförderrichtung bestimmt insoweit den Hauptproduktionsfluss der herzustellenden Betonwände und Betondecken. Im einfachsten Fall wird die Längsförderrichtung durch eine einzige gerade Förderstrecke bestimmt, welche von einer Bearbeitungsstation zur nächsten Bearbeitungsstation führt. Die Förderstrecke kann am Ende einer solchen Fertigungslinie enden, wobei die nach Abschluss der jeweiligen Wand- oder Deckenfertigung freiwerdenden Paletten wieder an den Anfang der Fertigungslinie zurückgeführt werden, d.h. insoweit innerhalb der Fertigungslinie logistisch umlaufen. Um an einer jeweiligen Bearbeitungsstation eine ankommende Palette in die Bearbeitungsstation verbringen zu können, umfasst die Paletten-Umlaufanlage ein oder mehrere Querfördereinrichtungen. Die Querfördereinrichtungen schleusen die Paletten insoweit an den betreffenden Stellen senkrecht, d.h. quer zur Hauptförderrichtung aus bzw. auch wieder ein.

Die Längsfördereinrichtung ist demgemäß ausgebildet zum Bewegen einer Palette innerhalb der Produktionsanlage in einer Hauptförderrichtung. Die Querfördereinrichtung ist ausgebildet zum Bewegen der Palette innerhalb der Produktionsanlage in einer quer zur Hauptförderrichtung laufenden Bewegungsrichtung. Die Querfördereinrichtung kann beispielsweise dazu dienen, die Palette aus der Hauptförderrichtung vorübergehend oder dauerhaft auszuschleusen. Die Palette ist dabei ausgebildet zum Tragen und Transportieren beispielsweise eines Schalungsrahmens bzw. eines in diesem Schalungsrahmen herzustellenden oder hergestellten Betonwandelements oder Betondeckenelements. Die Palette ist insbesondere zum bodennahen Transport ausgebildet. Die Palette kann insbesondere eine Schalung aufweisen, in der die Fertigbetonbauteile gefertigt werden.

Die Laufrollen können angetrieben sein. Alternativ können die Laufrollen antriebslos ausgebildet sein, wobei mehrere in der Hauptförderrichtung aufeinander folgende antriebslose Laufrollen beispielsweise durch wenigstens einen Reibradantrieb ergänzt sein können, welcher ausgebildet ist, eine auf mehreren Laufrollen beweglich sich abstützende Palette anzutreiben, wenn die Palette über das Antriebsreibrad des Reibradantriebs hinwegläuft. Die Laufrollen können in einer Ausführungsvariante als Spurkranzrollen ausgebildet sein. In einer anderen Ausführungsvariante können die Laufrollen als Konusrollen bzw. als Kegelrollen ausgebildet sein.

Beispielsweise können die Laufrollen zur Bildung einer zweispurigen Längsfördereinrichtung in zwei parallel zueinander verlaufenden Fundamentverankerungskästen angeordnet sein und jeweils ein Paar von gegenüberliegenden Laufrollen konisch bzw. kegelig aufeinander zulaufende Laufbahnen aufweisen.

Die jeweils paarweise gegenüberliegend angeordneten Laufrollen sind vorzugsweise derart angeordnet, dass sie eine gemeinsame Drehachse aufweisen bzw. die jeweiligen Drehachsen der beiden Laufrollen fluchten, d.h. auf einer gemeinsamen Geraden liegen. Durch die beiden konisch bzw. kegelig ausgebildeten Laufflächen der Laufrollen wird eine Selbstzentrierung der über die Laufrollen laufenden Palette erreicht. Hierbei kann insbesondere auf die Reibung erhöhende Spurkränze verzichtet werden.

Die Längsfördereinrichtung kann wenigstens einen Reibradantrieb aufweisen, welcher ausgebildet ist zum Antreiben einer auf den Laufrollen laufenden Palette, wobei der Reibradantrieb in den Fundamentverankerungskasten derart integriert ist, dass lediglich ein Teilabschnitt des angetriebenen Reibrades des Reibradantriebs über die Oberkante des Fundamentverankerungskastens nach oben heraussteht.

Der Hohlraum des jeweiligen Fundamentverankerungskastens kann generell mit ein oder mehreren Deckeln abgedeckt sein, indem eine oder mehrere nach oben weisende Öffnungen des Fundamentverankerungskastens durch den oder die Deckel verschlossen sind. Beispielsweise im Falle eines Hohlraums, in dem der Reibradantrieb angeordnet ist, kann ein dem Reibradantrieb zugeordneter Deckel einen Ausschnitt aufweisen, durch den der über die Oberkante des Fundamentverankerungskastens nach oben herausstehende Teilabschnitt des angetriebenen Reibrades des Reibradantriebs nach oben hindurchragt, wenn der Deckel im Bereich des Reibradantriebs auf den Fundamentverankerungskasten aufgesetzt wird.

In analoger Weise können in Fällen von Hohlräumen, in denen die Laufrollen angeordnet sind, ein den Laufrollen zugeordneter Deckel einen Ausschnitt für eine Laufrolle oder mehrere Ausschnitte für mehrere Laufrollen aufweisen, durch welchen wenigstens einen Ausschnitt der jeweilige über die Oberkante des Fundamentverankerungskastens nach oben herausstehende Teilabschnitt der Laufrolle nach oben hindurchragt, wenn der Deckel im Bereich der Laufrolle auf den Fundamentverankerungskasten aufgesetzt wird.

In den beispielhaft genannten Fundamentverankerungskästen kann auch die Querfördereinrichtung oder die mehreren Querfördereinrichtungen mit einem jeweiligen Fahrwagen untergebracht sein. Sie können Laufschienen aufweisen, auf denen der jeweilige Fahrwagen innerhalb eines Hohlraums des Fundamentverankerungskastens fährt.

Im Falle eines beispielsweise zweispurigen Fahrwagens kann der zugeordnete Fundamentverankerungskasten zwei Laufschienen aufweisen, die aufgrund ihrer vormontierten Ausbildung am Fundamentverankerungskasten, bereits bei der Herstellung des Fundamentverankerungskastens eingebracht bzw. montiert werden können, wobei bereits in diesem frühen Stadium der Herstellung bzw. Montage die Maßgenauigkeit hergestellt bzw. eingehalten werden kann, beispielsweise hinsichtlich der Parallelität der beiden in einem Abstand zueinander verlaufenden Laufschienen für den zweispurigen Fahrwagen.

Sämtliche Deckel bestimmen insoweit die Ebene des Bodens der Paletten-Umlaufanlage. Der Boden sollte möglichst eben ausgebildet sein. Die wenigstens eine Längsfördereinrichtung und die wenigstens eine Querfördereinrichtung sind also zumindest weitgehend unterhalb der Ebene des Bodens angeordnet. Lediglich die Laufrollen der Längsfördereinrichtung und das höhenverstellbare Hubmittel (zeitweise) ragen über die Ebene des Bodens nach oben heraus. Damit der Fahrwagen der Querfördereinrichtung eine aufgenommene, d.h. angehobene Palette in Querförderrichtung bewegen kann, wenn das Hubmittel also angehoben ist, d.h. über die Ebene des Bodens nach oben vorspringt, muss ein entsprechend quer verlaufender Spalt im Boden vorhanden sein. Der Spalt erstreckt sich somit oberhalb der jeweiligen Querfördereinrichtung in Querförderrichtung. Das angehobene Hubmittel bewegt sich während der Fahrbewegung des Fahrwagens also entlang des Spaltes.

Erfindungsgemäß ist eine spezielle Spaltabdeckungsvorrichtung vorgesehen.

In einer ersten grundlegenden Ausführung kann die Spaltabdeckungsvorrichtung mehrere an wenigstens einem umlaufenden Zugmittel seriell hintereinander angeordnete Abdeckplatten aufweisen. In einer zweiten grundlegenden Ausführung kann die Spaltabdeckungsvorrichtung ein Flachband aufweisen, welches einerseits das Abdeckmittel bildet und gleichzeitig funktionsvereinigend auch das Zugmittel bildet. In beiden Fällen wird jeweils nur das obere Trum des Zugmittels bzw. des Flachbands durch das Hubmittel angehoben, wobei das jeweilige untere Trum des Zugmittels bzw. des Flachbands seine Höhenlage, abgesehen vom Spiel des Zugmittels selbst, zumindest weitgehend oder genau beibehält. Entsprechend vorgesehene Umlenkrollen sind dann beiden Fällen insoweit höhenfest gelagert.

In der ersten grundlegenden Ausführung weist die Spaltabdeckungsvorrichtung mehrere an wenigstens einem umlaufenden Zugmittel seriell hintereinander angeordnete Abdeckplatten auf. Die Abdeckplatten sind an dem Zugmittel derart geführt, dass die sich jeweils in einem oberen Trum des Zugmittels befindenden Abdeckplatten den Spalt von oben abdeckend und insoweit auf dem Boden bündig, aber zumindest geringfügig höhenverstellbar aufliegen. Die jeweils im unteren Trum des Zugmittels befindenden Abdeckplatten befinden sich unterhalb des Fahrwagens in Rückführung. Dabei ist das höhenverstellbare Hubmittel ausgebildet zum Anheben mehrerer der im oberen Trum des Zugmittels befindenden Abdeckplatten, um diese vom Boden weg nach oben anzuheben, was aufgrund der zumindest geringfügigen Höhenverstellbarkeit der oberen Abdeckplatten möglich ist, so dass eine sich über den im oberen Trum des Zugmittels befindenden Abdeckplatten positionierte Palette auf diesen Abdeckplatten aufliegend durch das Hubmittel angehoben wird. Das Hubmittel drückt also eine Anzahl der oberen Abdeckplatten nach oben von dem Boden weg und die hochgedrückten Abdeckplatten drücken ihrerseits dann von unten gegen die Palette, so dass diese angehoben wird und in Querförderrichtung transportiert werden kann. Das Hubmittel ist Teil des Fahrwagens der Querfördereinrichtung, so dass sich das Hubmittel nach unten gegen den Fahrwagen abstützt bzw. an diesem gelagert ist. Ist die Palette durch das Hubmittel vom Boden angehoben, kann die Palette in Querförderrichtung durch Fahren des Fahrwagens in Querförderrichtung bewegt werden.

Eine Vielzahl von Abdeckplatten sind an dem wenigstens einen Zugmittel angeordnet. Die Abdeckplatten reihen sich an festen Plätzen an dem Zugmittel auf, und zwar derart, dass die im oberen Trum sich befindenden Abdeckplatten den Spalt vollständig abdecken. Vorzugsweise sind die Abdeckplatten dann bündig nebeneinander angeordnet, insbesondere gegeneinander zumindest weitgehend spaltfrei. Jede Abdeckplatte erstreckt sich quer zur Längserstreckung des Spaltes zumindest über die gesamte Spaltbreite hinweg, sowie vorzugsweise zusätzlich beidseitig über jeweils einen Flächenabschnitt des Bodens, jeweils linksseitig des Spaltes und rechtsseitig des Spaltes. Der Boden kann demgemäß von einer gewissen Anzahl von einzelnen Bodenplatten gebildet werden, die sich, zumindest weitgehend bündig aneinanderliegend, zu dem gesamten Boden der Paletten-Umlaufanlage ergänzen. Wenn die Abdeckplatten bündig auf dem Boden aufliegen, befindet sich das Zugmittel jedenfalls unterhalb des Bodens. Das obere Trum des Zugmittels erstreckt sich über dem Fahrwagen. Das untere Trum erstreckt sich unterhalb des Fahrwagens.

Mittels Umlenkrollen, die zu dem Zugmittel gehören, wird das Zugmittel im Umlauf geführt, so dass bei einer Umlaufbewegung des Zugmittels die Abdeckplatten des oberen Trums sich zunächst von einem lateralen Ende des Spaltes zum anderen lateralen Ende des Spaltes bewegen, im Endbereich des Spaltes nach unten abtauchen und sich dann im Abschnitt des unteren Trums unter dem Fahrwagen hinweg wieder an das ursprüngliche laterale Ende des Spaltes zurückbewegen und dort wieder nach oben auftauchen. Das Zugmittel ist vorzugsweise nicht selbständig angetrieben, d.h. keine der Umlenkrollen sind angetriebene Rollen. Vielmehr wird das Zugmittel nur dann mitbewegt, wenn der Fahrwagen in Bewegung ist und bei angehobenem Hubmittel in Kontakt mit den Unterseiten der Abdeckplatten im Abschnitt des oberen Trums ist.

Die Abdeckplatten sind vorzugsweise allein durch das Zugmittel geführt und liegen im Abschnitt des oberen Trums auf Randabschnitten der Bodenplatten, die den Spalt begrenzen, lediglich lose auf. Aufgrund des konstruktiv vorhandenen Zugmittelspiels können die Abdeckplatten im Abschnitt des oberen Trums jedoch eine abhebende Bewegung von den Randabschnitten der betreffenden Bodenplatten ausführen. Die Höhe, wie weit die Abdeckplatten von den Randabschnitten der Bodenplatten abheben können, bestimmt sich auch der Größe des Zugmittelspiels. Das Zugmittelspiel kann konstruktiv vorbestimmt und/oder einstellbar sein. Die Abdeckplatten können eine solche Bewegung ausführen, wenn das Hubmittel des Fahrwagens nach oben durch den Spalt hindurch angehoben wird und folglich wenigstens eine Oberkante des Hubmittels rückseitig gegen die Unterseiten der Abdeckplatten bzw. einer Gruppe von Abdeckplatten im Abschnitt des oberen Trums drückt.

Wenn sich nun eine Palette über dem Spalt befindet, kann diese Palette vom Boden, d.h. von den Bodenplatten wegführend nach oben angehoben werden, wenn das Hubmittel das Fahrwagens ausgefahren, d.h. angehoben wird. Das Hubmittel drückt die Abdeckplatten nach oben und die Abdeckplatten heben die Palette an. Aufgrund der Größe und/oder des Gewichts der Paletten können, entsprechend der Größe der Paletten, mehrere Spalte in Längsförderrichtung beabstandet voneinander vorgesehen sein und eine entsprechende Anzahl von mehreren Fahrwagen vorgesehen sein. Wenn die Palette mittels der ein oder mehreren Fahrwagen und der ein oder mehreren Spaltabdeckungsvorrichtungen angehoben ist, kann die Palette quer zur Längsförderrichtung der Paletten-Umlaufanlage seitlich von der Längsfördereinrichtung abgeführt und in Gegenrichtung auch wieder zugeführt werden. Mit einem Anheben der Palette wird die Palette aus einer bisherigen Führung der Längsfördereinrichtung herausgehoben.

Die Spaltabdeckungsvorrichtung kann an gegenüberliegenden Endbereichen des Spaltes jeweils wenigstens eine Umlenkrolle aufweisen, auf welchen Umlenkrollen das Zugmittel im Umlauf geführt ist, so dass bei einer Umlaufbewegung des Zugmittels die im Abschnitt des oberen Trums des Zugmittels befindenden Abdeckplatten sich in Querförderrichtung entlang des Spaltes bewegen, während sie weiterhin den Spalt abdecken.

Jede Umlenkrolle dient dazu, die Laufrichtung des wenigstens einen Zugmittels um 90 Grad umzulenken. Das Zugmittel ist demgemäß von jeder Laufrolle geführt. Bei einer Bewegung des Zugmittels werden die Abdeckplatten zunächst im Abschnitt des oberen Trums des Zugmittels zunächst in Querförderichtung entlang des Spaltes geführt, an der ersten Umlenkrolle tauchen die Abdeckplatten senkrecht nach unten weg, um an der zweiten Umlenkrolle in eine horizontale Bewegungsrichtung umgelenkt zu werden, so dass dann die Abdeckplatten sich im Abschnitt des unteren Trums befinden und demgemäß unterhalb des Fahrwagens auf einem Rückweg zurückgeführt werden, wo sie zunächst an einer dritten Laufrolle nach oben laufend umgelenkt werden und an einer vierten Umlenkrolle schließlich wieder am Beginn des Spaltes in eine horizontale Bewegungsrichtung in Querförderrichtung entlang des Spaltes bewegt werden, wo sie sich wieder im Abschnitt des oberen Trums befinden.

Die Abdeckplatten können derart am Zugmittel gelagert und/oder befestigt sein, dass die auf dem Boden aufliegenden Abdeckplatten im Abschnitt des oberen Trums stirnseitig bündig aneinander liegen, um den Spalt vollständig abzudecken.

Die Abdeckplatten sind in gleichmäßigen Abständen voneinander an dem Zugmittel gelagert oder befestigt. Der Abstand zweier unmittelbar benachbarter Abdeckplatten entspricht zumindest im Wesentlichen der Breite einer Abdeckplatte in Laufrichtung des Zugmittels. Das Zugmittel führt die Abdeckplatten derart, dass die Abdeckplatten seitlich des Spaltes mit jeweils einem Randabschnitt der Abdeckplatte auf Bodenplatten flächig aufliegen können, die den Spalt begrenzen. Die Abdeckplatten liegen insoweit auf den Bodenplatten lose auf, ohne an den Bodenplatten zusätzlich geführt oder gelagert zu sein.

Jede Abdeckplatte kann mittels wenigstens einer Lasche an dem Zugmittel befestigt sein. Jede Lasche kann dabei einen ersten Schenkel aufweisen, der an dem Zugmittel befestigt ist und einen zweiten Schenkel aufweisen, der an der Abdeckplatte befestigt ist. Wenn zwei parallel zueinander laufende Zugmittel vorgesehen sind, kann jeweils eine Abdeckplatte zwei entsprechend beabstandet voneinander befestigte Laschen aufweisen, wobei die erste Lasche der jeweiligen Abdeckplatte mit dem einen Zugmittel verbunden ist und die zweite Lasche der jeweiligen Abdeckplatte mit dem anderen Zugmittel verbunden ist.

In der zweiten grundlegenden Ausführung wird das Abdeckmittel von einem umlaufenden Flachband gebildet, das einerseits einen oberhalb des Spaltes verlaufender Flachband-Abschnitt aufweist, der den Spalt von oben abdeckend und andererseits einen unter dem Fahrwagen im Umlauf zurücklaufend geführten Flachband-Abschnitt aufweist, wobei das Zugmittel funktionsvereinigend von dem Flachband selbst gebildet wird. Das Flachband bildet somit analog einer zusammengefassten Anzahl von mehreren Abdeckplatten, ein durchgehendes Abdeckband. Das Abdeckband hat einerseits flächig eine solche Stabilität, dass es tragfähig auf dem Spalt aufliegen kann und andererseits ist das Abdeckband aufgrund seiner dünnen Gestalt so flexibel, dass es um die Umlaufrollen gebogen und an diesen geführt werden kann, wie diese Funktion im Falle von mehreren Abdeckplatten durch das separate Zugmittel realisiert ist.

Das Zugmittel kann ausschließlich an antriebslosen Umlenkrollen geführt sein. Das Zugmittel wird demgemäß nicht eigenständig angetrieben, um die Abdeckplatten aktiv zu bewegen. Vielmehr werden diejenigen Abdeckplatten direkt verschoben, wenn das Hubmittel des Fahrwagens diese Abdeckplatten kontaktiert und anhebt. Die Bewegung der Abdeckplatten resultiert dann aus einer Fahrbewegung des Fahrwagens. Wenn sich die Abdeckplatten im oberen Trum entlang des Spaltes bewegen, wird das wenigstens eine Zugmittel insoweit mitgezogen und alle anderen Abdeckplatte auch.

Das Zugmittel kann federvorgespannt an den Umlenkrollen geführt sein, indem wenigstens eine der Umlenkrollen in Zugrichtung des Zugmittels verstellbar gelagert ist und die Umlenkrolle mittels einer an einem Lagersitz der Umlenkrolle angreifenden Feder entgegen der Zugrichtung des Zugmittels vorgespannt ist.

Die Feder gibt die Spannung für das wenigstens eine Zugmittel vor. Die Spannung kann so eingestellt werden, dass das Zugmittel im erforderlichen bzw. benötigten Umfang mit seitlichem Spiel auslenken kann. Die Größe der möglichen Auslenkung des Zugmittels gibt den Höhenbetrag vor, um den die Abdeckplatten im oberen Trum des Zugmittels vom Boden bzw. von den Bodenplatten durch das Hubmittel angehoben werden können.

Die Spaltabdeckungsvorrichtung kann an gegenüberliegenden Endbereichen des Spaltes jeweils eine obere Umlenkrolle und eine untere Umlenkrolle aufweisen, auf welchen vier Umlenkrollen das Zugmittel im Umlauf geführt ist, wobei die beiden oberen Umlenkrollen separat von den beiden unteren Umlenkrollen gegeneinander verstellbar und/oder vorspannbar gelagert sind.

Die Spaltabdeckungsvorrichtung kann zwei Zugmittel umfassen, welche parallel zueinander verlaufend gelagert sind und jede Abdeckplatte kann dabei sowohl an dem einen Zugmittel als auch an dem anderen Zugmittel gelagert und/oder befestigt sein.

Der Fahrwagen kann allgemein einen Antrieb aufweisen, der ausgebildet ist, den Fahrwagen in Querförderrichtung automatisch zu bewegen und der angetriebene Fahrwagen das Abdeckmittel zusammen mit dem wenigstens einen Zugmittel antreibt, wenn das Hubmittel gegen die Rückseite des Abdeckmittels drückt, um dieses anzuheben.

Im Falle von Abdeckplatten und separaten Zugmitteln kann der Fahrwagen einen Antrieb aufweisen, der ausgebildet ist, den Fahrwagen in Querförderrichtung automatisch zu bewegen und der angetriebene Fahrwagen kann dabei die Abdeckplatten zusammen mit dem wenigstens einen Zugmittel antreiben, wenn das Hubmittel gegen die Rückseiten einer Gruppe von mehreren Abdeckplatten im Abschnitt des oberen Trums drückt, um diese anzuheben.

Das Hubmittel kann ein zwischen einer Verwahrungsstellung und einer Betriebsstellung höhenverstellbar gelagertes Hubschwert umfassen, welches eine sich in Querförderrichtung erstreckende Oberkante aufweist, welche in der Betriebsstellung des Hubschwertes gegen die Rückseite des Abdeckmittels drückt, um dieses anzuheben.

Das Hubmittel kann ein zwischen einer Verwahrungsstellung und einer Betriebsstellung höhenverstellbar gelagertes Hubschwert umfassen, welches eine sich in Querförderrichtung erstreckende Oberkante aufweist, welche in der Betriebsstellung des Hubschwertes gegen die Rückseiten einer Gruppe von mehreren Abdeckplatten im Abschnitt des oberen Trums drückt, um diese Abdeckplatten anzuheben.

Das Hubschwert kann aus einer zumindest im Wesentlichen quaderförmigen Platte gebildet werden, die im Fahrwagen vertikal gelagert ist, so dass sich eine obere Fläche der Platte, die insoweit eine Oberkante bildet, gegen die Unterseiten der Abdeckplatten drücken lässt. Die Platte erstreckt sich insoweit mit ihrer größten Ausdehnung entlang des Spaltes. Die obere Fläche der Platte kann eine Gruppe von mehreren unmittelbar nebeneinander angeordneter Abdeckplatten gleichzeitig anheben.

Der Fahrwagen kann einen Hubantrieb aufweisen, der ausgebildet ist zum automatischen Bewegen des Hubmittels zwischen einer Verwahrungsstellung, in welcher das Hubmittel in den Fahrwagen zurückbewegt ist, so dass das Hubmittel keinen Kontakt zum Abdeckmittel hat, und einer Betriebsstellung, in der das Hubmittel gegen die Rückseite des Abdeckmittels drückt, um dieses anzuheben.

Im Falle von Abdeckplatten und separaten Zugmitteln kann der Fahrwagen einen Hubantrieb aufweisen, der ausgebildet ist zum automatischen Bewegen des Hubmittels zwischen einer Verwahrungsstellung, in welcher das Hubmittel in den Fahrwagen zurückbewegt ist, so dass das Hubmittel keinen Kontakt zu den Abdeckplatten hat, und einer Betriebsstellung, in der das Hubmittel gegen die Rückseiten einer Gruppe von mehreren Abdeckplatten im Abschnitt des oberen Trums drückt, um diese Abdeckplatten anzuheben.

Der Hubantrieb kann wenigstens einen Hydraulikzylinder, wenigstens einen Pneumatikzylinder und/oder wenigstens ein elektrisches Hubantriebsmittel umfassen, welches ausgebildet ist zum Anheben und/oder Absenken des Hubmittels. Der Hubantrieb kann demgemäß ein hydraulischer, pneumatischer und/oder elektrischer Antrieb sein.

Die Hubbeweglichkeit des Abdeckmittels gegenüber dem Boden kann aus dem Spiel des Abdeckmittels im Abschnitt oberhalb des Spaltes resultieren.

Die Hubbeweglichkeit der Abdeckplatten gegenüber dem Boden im Abschnitt des oberen Trums des Zugmittels kann insbesondere aus dem Spiel des Zugmittels im Abschnitt des oberen Trums resultieren.

Das Zugmittel kann eine Kette, ein Riemen, ein Zahnriemen, ein Flachband, insbesondere ein Stahlband, oder ein Seil sein.

Im Falle einer Kette als Zugmittel können die Umlenkrollen demgemäß als Zahnräder bzw. als Ritzel ausgeführt sein. Als Riemen kann insbesondere ein Zahnriemen Anwendung finden. Der Zahnriemen kann mittels gezahnter Riemenscheiben als Umlenkrollen geführt sein. Im Falle eines Seils als Zugmittel, kann es sich beispielsweise um ein Stahlseil handeln. Das Stahlseil kann an Seilrollen als Umlenkrollen geführt sein.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung einer beispielhaften Paletten-Umlaufanlage mit einer Längsfördereinrichtung und mehreren Querfördereinrichtungen,
- Fig. 2: eine perspektivische Teildarstellung der Paletten-Umlaufanlage gemäß Fig. 1 im Bereich einer Gruppe von drei Querfördereinrichtungen zum Querfördern einer Palette,
- Fig. 3: eine perspektivische Darstellung der Paletten-Umlaufanlage gemäß Fig. 1 im Bereich einer Querfördereinrichtung mit teilweise entfernten Bodenplatten und sonstigen Deckeln,
- Fig. 4: eine perspektivische Darstellung eines freigeschnittenen Abschnitts einer Querfördereinrichtung, so dass eine beispielhafte Ausführungsform einer erfindungsgemäßen Spaltabdeckungsvorrichtung bei teilweise entfernten Bodenplatten erkennbar ist,
- Fig. 5: eine vergrößerte Teilansicht der Spaltabdeckungsvorrichtung gemäß Fig. 4 im Bereich einer Umlenkung des Zugmittels,
- Fig. 6: eine perspektivische Detaildarstellung der Befestigung von Abdeckplatten an den Zugmitteln im Bereich des unteren Trums,
- Fig. 7: eine Seitenansicht auf einen Fahrwagen mit einem Hubmittel unterhalb der Abdeckplatten eines Abschnitts des oberen Trums der Zugmittel,
- Fig. 8: eine schematische Darstellung der Spaltabdeckungsvorrichtung mit dem Fahrwagen und einem Hubmittel in seiner Verwahrungsstellung, wobei die Palette noch nicht angehoben ist,
- Fig. 9: eine schematische Darstellung der Spaltabdeckungsvorrichtung mit dem Fahrwagen und dem Hubmittel in seiner Betriebsstellung, in der das Hubmittel die Abdeckplatten im Abschnitt des oberen Trums der Zugmittel anhebt, wobei die Palette angehoben ist, und
- Fig. 10: eine schematische Darstellung der Spaltabdeckungsvorrichtung mit dem Fahrwagen und dem Hubmittel in seiner Betriebsstellung mit angehobener Palette, wobei durch Fahren des Fahrwagens die angehobene Palette in Querförderrichtung seitlich wegbewegt wird.

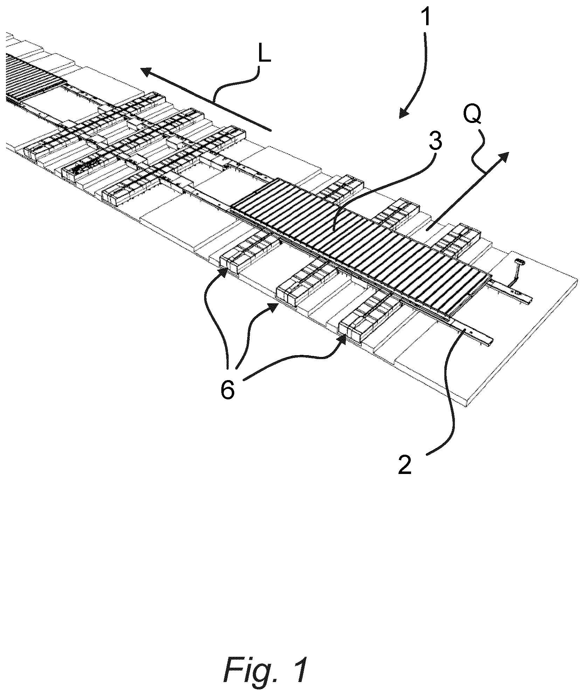

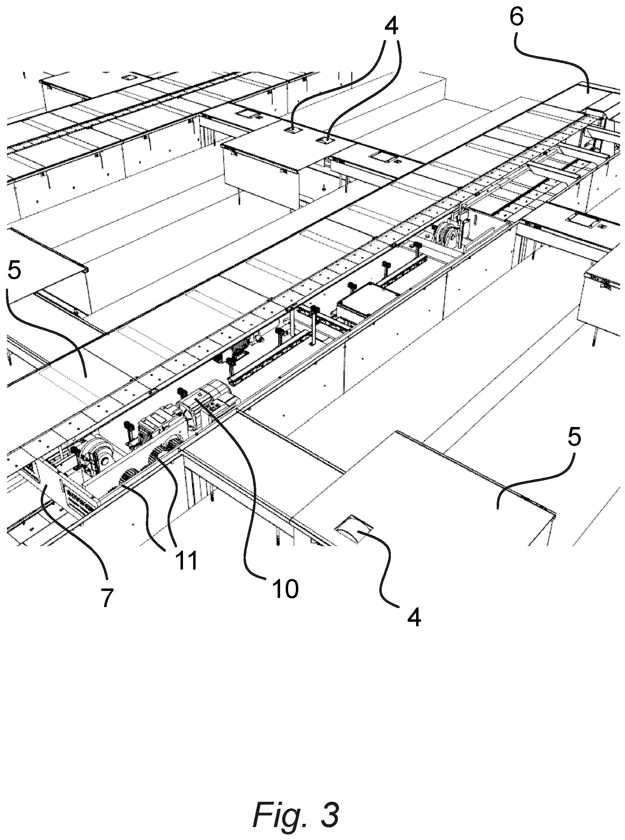

In der Fig. 1 bis Fig. 3 ist eine beispielhafte Paletten-Umlaufanlage 1 zur Herstellung von Fertigbetonbauteilen dargestellt. Die Paletten-Umlaufanlage 1 weist eine Längsfördereinrichtung 2 auf, mit mehreren die Paletten 3 in Längsförderrichtung L fördernde Laufrollen 4 (Fig.3), welche lediglich in Teilabschnitten jeder Laufrolle 4 über einen Boden 5 der Paletten-Umlaufanlage 1 nach oben herausstehen.

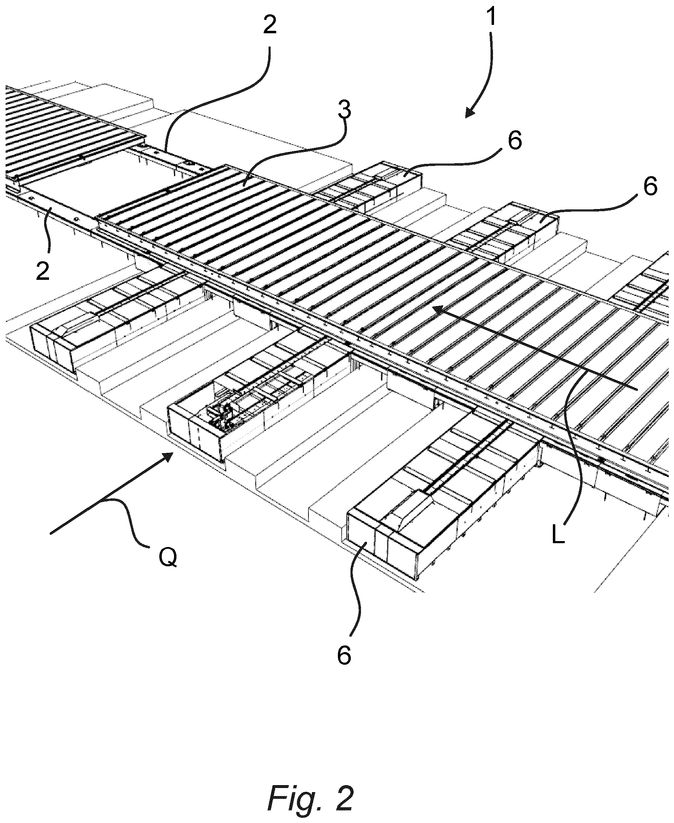

Die Paletten-Umlaufanlage 1 weist im Falle des vorliegenden Ausführungsbeispiels mehrere unter dem Boden 5 angeordnete Querfördereinrichtungen 6 mit jeweils einem eine jeweilige Palette 3 in Querförderrichtung Q transportierenden Fahrwagen 7 und einem an dem jeweiligen Fahrwagen 7 höhenverstellbar angeordneten Hubmittel 8 zum Anheben der jeweils zum Transportieren in Querförderrichtung Q aufzunehmenden Palette 3. In Fig. 2 ist ein Ausschnitt der Paletten-Umlaufanlage 1 im Bereich dreier Querfördereinrichtungen 6 gezeigt, die eine Gruppe zum Querfördern einer Palette 3 bilden. Die Fig. 3 zeigt einen Ausschnitt auf eine einzelne Querfördereinrichtung 6 der Paletten-Umlaufanlage 1 bei teilweise entfernten Bodenplatten 9 und sonstigen Deckeln, so dass der unterhalb des eigentlichen Bodens 5 angeordnete Fahrwagen 7 erkennbar ist.

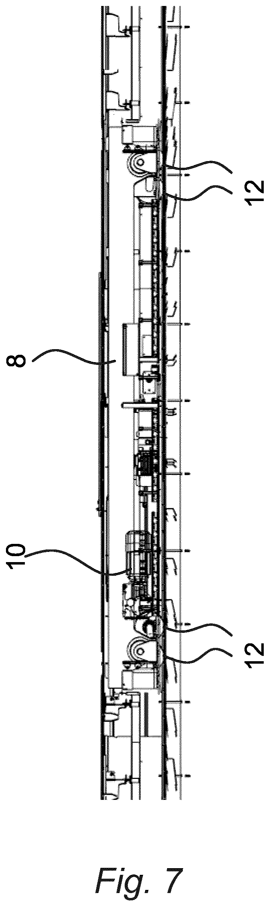

Der Fahrwagen 7 weist im Falle des vorliegenden Ausführungsbeispiels einen elektrischen Antrieb 10 auf, der ausgebildet ist zum automatischen Bewegen des Fahrwagens 7 in Querförderrichtung Q. Dazu weist der elektrische Antrieb 10 einen elektrischen Motor auf und ein Winkelgetriebe, welches Zahnräder 11 antriebt, die an Räder 12 (Fig. 7) des Fahrwagens 7 angekoppelt sind. Innerhalb des Fahrwagens 7 ist das Hubmittel 8 (Fig. 7) höhenverstellbar angeordnet.

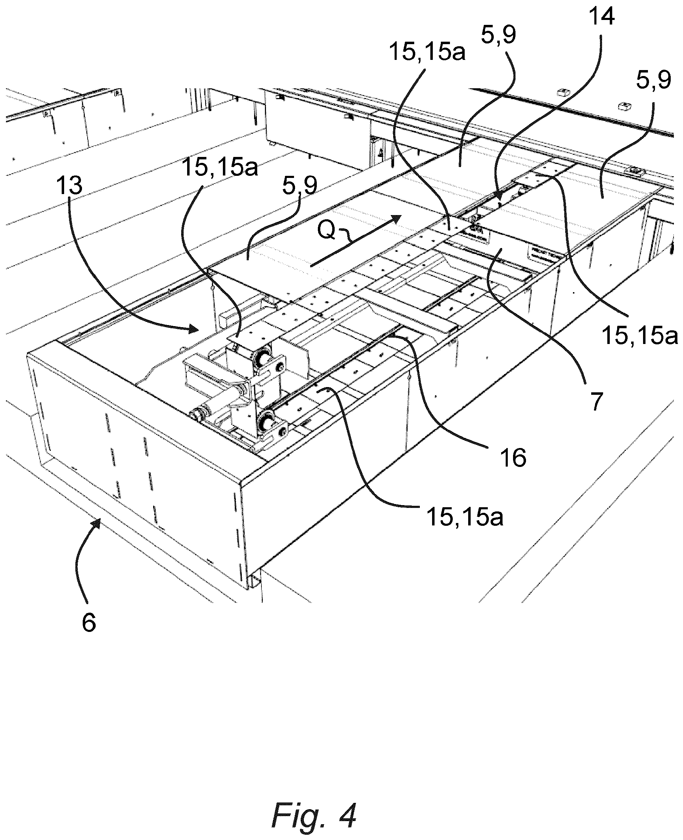

Der Boden 5 kann aus einer Vielzahl von Bodenplatten 9 gebildet werden, die in einer gemeinsamen Ebene liegen. Die Fig. 4 zeigt ein konkretes Ausführungsbeispiel einer erfindungsgemäßen Spaltabdeckungsvorrichtung 13. Oberhalb der Querfördereinrichtung 6 weist der Boden 5 einen sich in Querförderrichtung Q erstreckenden Spalt 14 auf. In Fig. 4 sind die Bodenplatten 9 teilweise entfernt, so dass die darunter angeordnete Spaltabdeckungsvorrichtung 13 erkennbar ist.

Im Falle des vorliegenden Ausführungsbeispiels wird das Abdeckmittel 15 von mehreren Abdeckplatten 15 a und wenigstens einem Zugmittel 16 gebildet. Teilweise sind in Fig. 4 auch die Abdeckplatten 15a entfernt, so dass wiederum der Spalt 14 besser erkennbar ist.

Die Spaltabdeckungsvorrichtung 13 weist mehrere an wenigstens einem umlaufenden Zugmittel 16 seriell hintereinander angeordnete Abdeckplatten 15a auf, die an dem Zugmittel 16 derart geführt sind, dass die sich jeweils in einem oberen Trum des Zugmittels 16 befindenden Abdeckplatten 15a den Spalt 14 von oben abdeckend auf dem Boden 5 höhenverstellbar aufliegen und die sich jeweils im unteren Trum des Zugmittels 16 befindenden Abdeckplatten 15a unterhalb des Fahrwagens 7 in Rückführung befinden.

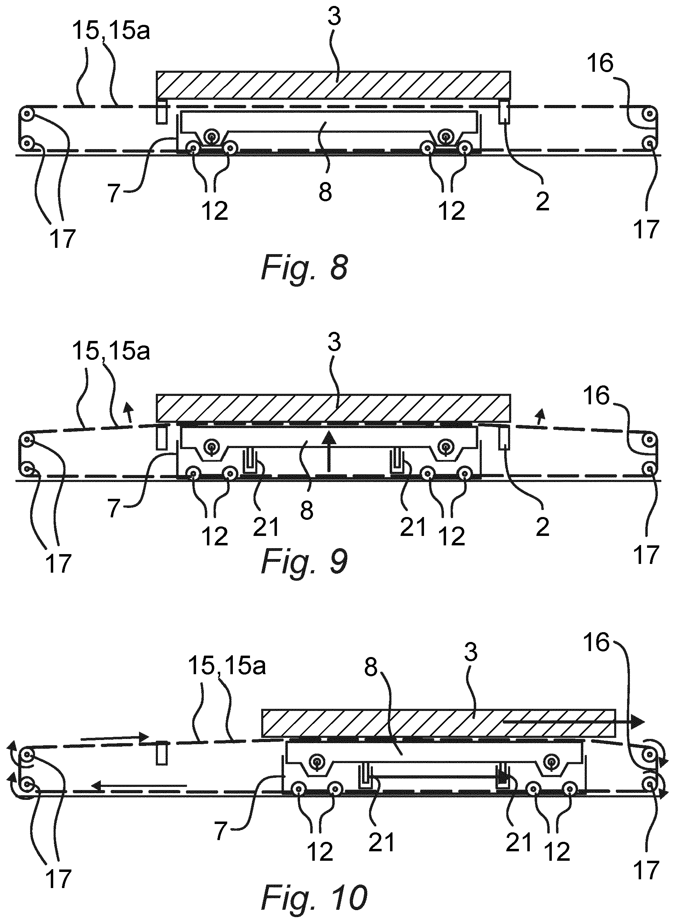

Das höhenverstellbare Hubmittel 8 des Fahrwagens 7 ist zum Anheben mehrerer der im oberen Trum des Zugmittels 16 befindenden Abdeckplatten 15a ausgebildet, um diese vom Boden 5 weg nach oben anzuheben, wie dies insbesondere in Fig. 9 aufgezeigt ist, so dass eine sich über den im oberen Trum des Zugmittels 16 befindenden Abdeckplatten 15a positionierte Palette 3 auf diesen Abdeckplatten 15a aufliegend durch das Hubmittel 8 angehoben wird.

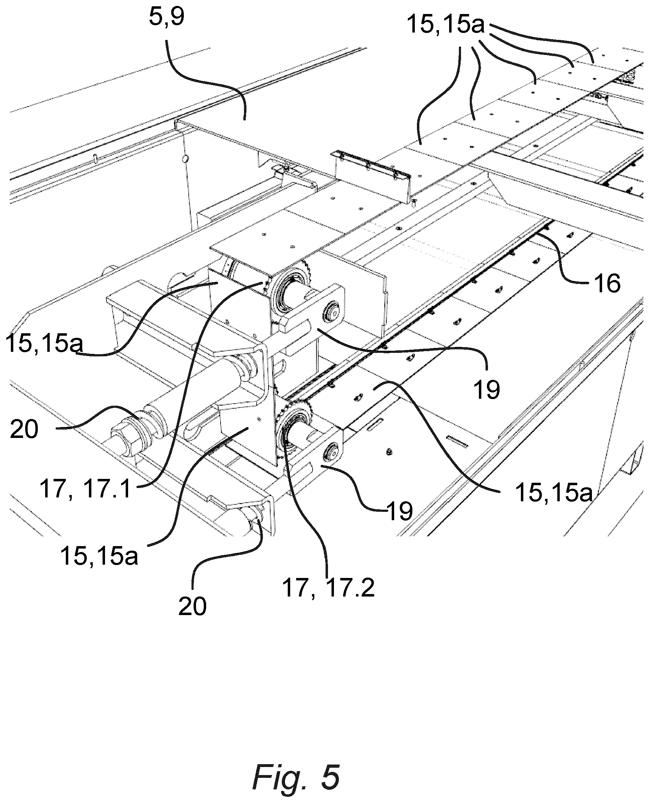

Speziell in Fig. 5 und Fig. 8 bis Fig. 10 ist erkennbar, wie die Spaltabdeckungsvorrichtung 13 an gegenüberliegenden Endbereichen des Spaltes 14 jeweils wenigstens eine Umlenkrolle 17 aufweist, auf welchen Umlenkrollen 17 das Zugmittel 16 im Umlauf geführt ist, so dass bei einer Umlaufbewegung des Zugmittels (Pfeile in Fig. 10) die im Abschnitt des oberen Trums des Zugmittels 16 befindenden Abdeckplatten 15a sich in Querförderrichtung Q entlang des Spaltes 14 bewegen, während sie weiterhin den Spalt 14 abdecken.

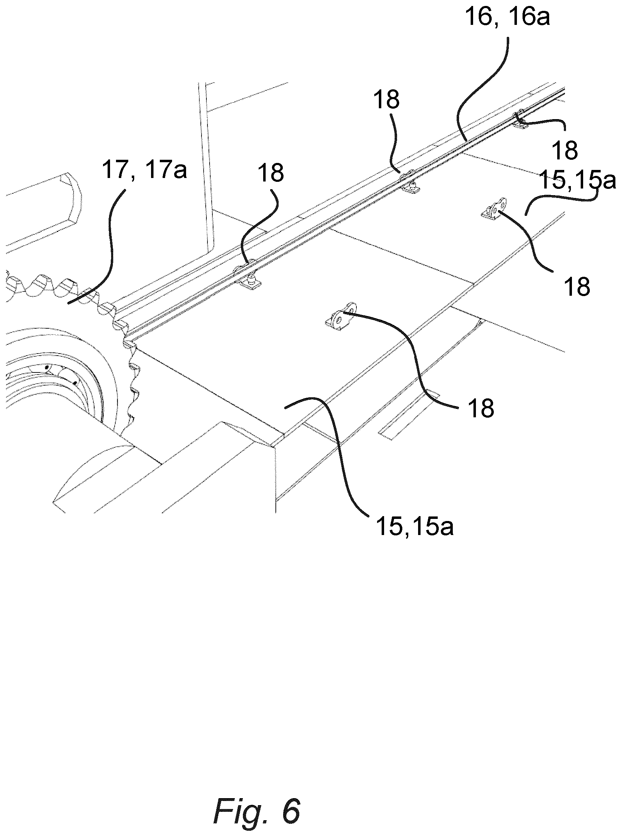

In Fig. 6 ist gezeigt, wie die Abdeckplatten 15a derart am Zugmittel 16 gelagert und/oder befestigt sind, dass die auf dem Boden 5 aufliegenden Abdeckplatten 15a im Abschnitt des oberen Trums stirnseitig bündig aneinander liegen, um den Spalt 14 vollständig abzudecken.

Im Falle des vorliegenden Ausführungsbeispiels ist jede Abdeckplatte 15a mittels wenigstens einer Lasche 18 an dem Zugmittel 16 befestigt. Im Ausführungsbeispiel sind zwei parallel zueinander verlaufende Zugmittel 16 in Form von zwei Ketten 16a vorgesehen, die auf Zahnrädern 17a als Beispiel von speziellen Umlenkrollen 17 laufen.

Das Zugmittel 16 bzw. die beiden Ketten 16a sind ausschließlich an antriebslosen Umlenkrollen 17, d.h. antriebslosen Zahnrädern 17a geführt.

Das Zugmittel 16 bzw. die beiden Ketten 16a sind federvorgespannt an den Umlenkrollen 17 geführt, indem wenigstens eine der Umlenkrollen 17 in Zugrichtung des Zugmittels 16 verstellbar gelagert ist und die Umlenkrolle 17 mittels einer an einem jeweiligen Lagersitz 19 der Umlenkrolle 17 angreifenden Feder 20 entgegen der Zugrichtung des Zugmittels 16 vorgespannt ist.

Die Spaltabdeckungsvorrichtung 13 weist an gegenüberliegenden Endbereichen des Spaltes 14 somit jeweils eine obere Umlenkrolle 17.1 und eine untere Umlenkrolle 17.2 auf, auf welchen vier Umlenkrollen 17 das Zugmittel 16 im Umlauf geführt ist, wobei die beiden oberen Umlenkrollen 17.1 separat von den beiden unteren Umlenkrollen 17.2 gegeneinander verstellbar und/oder vorspannbar mittels der beiden Federn 20 gelagert sind.

Die Spaltabdeckungsvorrichtung 13 umfasst im Falle des vorliegenden Ausführungsbeispiels, wie bereits erwähnt, zwei Zugmittel 16 bzw. zwei Ketten 16a, welche parallel zueinander verlaufend gelagert sind und jede Abdeckplatte 15a sowohl an dem einen Zugmittel 16 als auch an dem anderen Zugmittel 16 gelagert und/oder befestigt ist, nämlich mittels der Laschen 18, wie dies speziell in Fig. 6 aufgezeigt ist.

Insbesondere Fig. 3 und Fig. 7 zeigen den Antrieb 10, der ausgebildet ist, den Fahrwagen 7 in Querförderrichtung Q automatisch zu bewegen. Die Fig. 10 wiederum zeigt auf, wie der angetriebene Fahrwagen 7 bei angehobenem Hubmittel 8 die Abdeckplatten 15a zusammen mit den Zugmitteln 16 antreibt, wenn das Hubmittel 8 gegen die Rückseiten einer Gruppe von mehreren Abdeckplatten 15a im Abschnitt des oberen Trums drückt, um diese anzuheben.

Wie die Fig. 8 bis Fig. 10 am besten zeigen, ist das Hubmittel 8 als ein Hubschwert ausgebildet, das zwischen einer Verwahrungsstellung (Fig. 8) und einer Betriebsstellung (Fig. 9 und Fig. 10) höhenverstellbar gelagert ist. Das Hubschwert weist eine sich in Querförderrichtung Q erstreckende Oberkante auf, welche in der Betriebsstellung des Hubschwertes gegen die Rückseiten einer Gruppe von mehreren Abdeckplatten 15a im Abschnitt des oberen Trums drückt, um diese Abdeckplatten 15a anzuheben.

Der Fahrwagen 7 enthält einen Hubantrieb 21, der ausgebildet ist zum automatischen Bewegen des Hubmittels 8 zwischen einer Verwahrungsstellung (Fig. 8), in welcher das Hubmittel 8 in den Fahrwagen 7 zurückbewegt ist, so dass das Hubmittel 8 keinen Kontakt zu den Abdeckplatten 15a hat, und einer Betriebsstellung (Fig. 9 und Fig. 10), in der das Hubmittel 8 gegen die Rückseiten einer Gruppe von mehreren Abdeckplatten 15a im Abschnitt des oberen Trums drückt, um diese Abdeckplatten 15a anzuheben, wie dies insbesondere durch Fig. 9 veranschaulicht ist.

Der Hubantrieb 21 kann beispielsweise wenigstens einen Hydraulikzylinder umfassen, welches ausgebildet ist zum Anheben und/oder Absenken des Hubmittels 8.

Die Hubbeweglichkeit der Abdeckplatten 15a gegenüber dem Boden 5 im Abschnitt des oberen Trums des Zugmittels 16 wird aus dem Spiel des Zugmittels 16 im Abschnitt des oberen Trums gewonnen, wie dies in Fig. 9 und Fig. 10 angedeutet ist.

## Patentansprüche

1. Bodenplatten-Fundamentsystem für Produktionsanlagen mit zu fördernden Paletten (3), insbesondere Paletten-Umlaufanlage zur Herstellung von Fertigbetonbauteilen, aufweisend wenigstens eine Längsfördereinrichtung (2), mit mehreren die Paletten (3) in Längsförderrichtung (L) fördernde Laufrollen (4), welche lediglich in Teilabschnitten jeder Laufrolle (4) über einen Boden (5) nach oben herausstehen, und aufweisend wenigstens eine unter dem Boden (5) angeordnete Querfördereinrichtung (6) mit einem eine jeweilige Palette (3) in Querförderrichtung (Q) transportierenden Fahrwagen (7) und einem an dem Fahrwagen (7) höhenverstellbar angeordneten Hubmittel (8) zum Anheben der jeweils zum Transportieren in Querförderrichtung (Q) aufzunehmenden Palette (3), wobei der Boden (5) einen sich über der Querfördereinrichtung (6) in Querförderrichtung (Q) erstreckenden Spalt (14) aufweist, **gekennzeichnet durch** eine Spaltabdeckungsvorrichtung (13), die wenigstens ein umlaufendes Abdeckmittel (15) aufweist, das an dem Spalt (14) derart geführt ist, dass ein oberhalb des Spaltes (14) verlaufender **Ab**schnitt des Abdeckmittels (15) den Spalt (14) von oben abdeckend auf dem Boden (5) höhenverstellbar aufliegend angeordnet ist und ein unterhalb des Spaltes (14) in Rückführung befindender Abschnitt des Abdeckmittels (15) unter dem Fahrwagen (7) im Umlauf zurücklaufend geführt ist, wobei das höhenverstellbare Hubmittel (8) ausgebildet ist zum Anheben des oberhalb des Spaltes (14) verlaufenden Abschnitts des Abdeckmittels (15), um diesen vom Boden (5) weg nach oben anzuheben, so dass eine sich über diesen angehobenen Abschnitt des Abdeckmittels (15) positionierte Palette (3) auf dem oberhalb des Spaltes (14) verlaufenden Abschnitt des Abdeckmittels (15) aufliegend durch das Hubmittel (8) angehoben wird.

2. Bodenplatten-Fundamentsystem nach Anspruch 1, **dadurch gekennzeichnet, dass** das Abdeckmittel (15) mehrere an wenigstens einem umlaufenden Zugmittel (16) seriell hintereinander angeordnete Abdeckplatten (15a) aufweist, die an dem Zugmittel (16) derart geführt sind, dass die sich jeweils in einem oberen Trum des Zugmittels (16) befindenden Abdeckplatten (15a) den Spalt (14) von oben abdeckend auf dem Boden (5) höhenverstellbar aufliegen und die sich jeweils im unteren Trum des Zugmittels (16) befindenden Abdeckplatten (15a) unterhalb des Fahrwagens (7) in Rückführung befinden, wobei das höhenverstellbare Hubmittel (8) ausgebildet ist zum Anheben mehrerer der im oberen Trum des Zugmittels (16) befindenden Abdeckplatten (15a), um diese vom Boden (5) weg nach oben anzuheben, so dass eine sich über den im oberen Trum des Zugmittels (16) befindenden Abdeckplatten (15a) positionierte Palette (3) auf diesen Abdeckplatten (15a) aufliegend durch das Hubmittel (8) angehoben wird.

3. Bodenplatten-Fundamentsystem nach Anspruch 2, **dadurch gekennzeichnet, dass** die Spaltabdeckungsvorrichtung (13) an gegenüberliegenden Endbereichen des Spaltes (14) jeweils wenigstens eine Umlenkrolle (17) aufweist, auf welchen Umlenkrollen (17) das Zugmittel (16) im Umlauf geführt ist, so dass bei einer Umlaufbewegung des Zugmittels (16) die im Abschnitt des oberen Trums des Zugmittels (16) befindenden Abdeckplatten (15) sich in Querförderrichtung (Q) entlang des Spaltes (14) bewegen, während sie weiterhin den Spalt (14) abdecken.

4. Bodenplatten-Fundamentsystem nach Anspruch 2 oder 3, **dadurch gekennzeichnet, dass** die Abdeckplatten (15a) derart am Zugmittel (16) gelagert und/oder befestigt sind, dass die auf dem Boden (5) aufliegenden Abdeckplatten (15a) im Abschnitt des oberen Trums stirnseitig bündig aneinander liegen, um den Spalt (14) vollständig abzudecken.

5. Bodenplatten-Fundamentsystem nach einem der Ansprüche 2 bis 4, **dadurch gekennzeichnet, dass** jede Abdeckplatte (15a) mittels wenigstens einer Lasche (18) an dem Zugmittel (16) befestigt ist.

6. Bodenplatten-Fundamentsystem nach einem der Ansprüche 2 bis 5, **dadurch gekennzeichnet, dass** die Spaltabdeckungsvorrichtung (13) zwei Zugmittel (16) umfasst, welche parallel zueinander verlaufend gelagert sind und jede Abdeckplatte (15a) sowohl an dem einen Zugmittel (16) als auch an dem anderen Zugmittel (16) gelagert und/oder befestigt ist.

7. Bodenplatten-Fundamentsystem nach Anspruch 1, **dadurch gekennzeichnet, dass** das Abdeckmittel (15) von einem umlaufenden Flachband (15b) gebildet wird, das einerseits einen oberhalb des Spaltes (14) verlaufender Flachband-Abschnitt aufweist, der den Spalt (14) von oben abdeckend und andererseits einen unter dem Fahrwagen (7) im Umlauf zurücklaufend geführten Flachband-Abschnitt aufweist, wobei das Zugmittel funktionsvereinigend von dem Flachband (15b) selbst gebildet wird.

8. Bodenplatten-Fundamentsystem nach einem der Ansprüche 1 bis 7, **dadurch gekennzeichnet, dass** das Zugmittel (16) ausschließlich an antriebslosen Umlenkrollen (17) geführt ist.

9. Bodenplatten-Fundamentsystem nach einem der Ansprüche 1 bis 8, **dadurch gekennzeichnet, dass** das Zugmittel (16) federvorgespannt an den Umlenkrollen (17) geführt ist, indem wenigstens eine der Umlenkrollen (17) in Zugrichtung des Zugmittels (16) verstellbar gelagert ist und die Umlenkrolle (17) mittels einer an einem Lagersitz (19) der Umlenkrolle (17) angreifenden Feder (20) entgegen der Zugrichtung des Zugmittels (16) vorgespannt ist.

10. Bodenplatten-Fundamentsystem nach einem der Ansprüche 1 bis 9, **dadurch gekennzeichnet, dass** die Spaltabdeckungsvorrichtung (13) an gegenüberliegenden Endbereichen des Spaltes (14) jeweils eine obere Umlenkrolle (17.1) und eine untere Umlenkrolle (17.2) aufweist, auf welchen vier Umlenkrollen (17.1, 17.2) das Zugmittel (16) im Umlauf geführt ist, wobei die beiden oberen Umlenkrollen (17.1) separat von den beiden unteren Umlenkrollen (17.2) gegeneinander verstellbar und/oder vorspannbar gelagert sind.

11. Bodenplatten-Fundamentsystem nach einem der Ansprüche 1 bis 10, **dadurch gekennzeichnet, dass** der Fahrwagen (7) einen Antrieb (10) aufweist, der ausgebildet ist, den Fahrwagen (7) in Querförderrichtung (Q) automatisch zu bewegen und der angetriebene Fahrwagen (7) das Abdeckmittel (15) zusammen mit dem wenigstens einen Zugmittel (16) antreibt, wenn das Hubmittel (8) gegen die Rückseiten des Abdeckmittels (15) drückt, um dieses anzuheben.

12. Bodenplatten-Fundamentsystem nach einem der Ansprüche 1 bis 11, **dadurch gekennzeichnet, dass** das Hubmittel (8) ein zwischen einer Verwahrungsstellung und einer Betriebsstellung höhenverstellbar gelagertes Hubschwert umfasst, welches eine sich in Querförderrichtung (Q) erstreckende Oberkante aufweist, welche in der Betriebsstellung des Hubschwertes gegen die Rückseite des Abdeckmittels (15) drückt, um dieses anzuheben.

13. Bodenplatten-Fundamentsystem nach einem der Ansprüche 1 bis 12, **dadurch gekennzeichnet, dass** der Fahrwagen (7) einen Hubantrieb (21) aufweist, der ausgebildet ist zum automatischen Bewegen des Hubmittels (8) zwischen einer Verwahrungsstellung, in welcher das Hubmittel (8) in den Fahrwagen (7) zurückbewegt ist, so dass das Hubmittel (8) keinen Kontakt zum Abdeckmittel (15) hat, und einer Betriebsstellung, in der das Hubmittel (8) gegen die Rückseite des Abdeckmittels (15) drückt, um dieses anzuheben.

14. Bodenplatten-Fundamentsystem nach Anspruch 13, **dadurch gekennzeichnet, dass** der Hubantrieb (21) wenigstens einen Hydraulikzylinder, wenigstens einen Pneumatikzylinder und/oder wenigstens ein elektrisches Hubantriebsmittel umfasst, welches ausgebildet ist zum Anheben und/oder Absenken des Hubmittels (8).

15. Bodenplatten-Fundamentsystem nach einem der Ansprüche 1 bis 14, **dadurch gekennzeichnet, dass** die Hubbeweglichkeit des Abdeckmittels (15) gegenüber dem Boden (5) aus dem Spiel des Abdeckmittels (15) im Abschnitt oberhalb des Spaltes (14) resultiert.

16. Bodenplatten-Fundamentsystem nach einem der Ansprüche 1 bis 15, **dadurch gekennzeichnet, dass** das Zugmittel (16) eine Kette (16a), ein Riemen, ein Zahnriemen, ein Flachband (15b) oder ein Seil ist.

## Claims

1. Floor slab foundation system for production plants with pallets (3) to be conveyed, in particular pallet circulation system for the production of prefabricated concrete components, having at least one longitudinal conveying device (2) with a plurality of rollers (4) conveying the pallets (3) in the longitudinal conveying direction (L), which rollers protrude upwards above a floor (5) only in partial sections of each roller (4), and having at least one transverse conveying device (6) arranged below the floor (5) and having a carriage (7) transporting a respective pallet (3) in the transverse conveying direction (Q) and a lifting means (8) arranged on the carriage (7) in a height-adjustable manner for lifting the respective pallet (3) to be picked up for transportation in the transverse conveying direction (Q), the floor (5) having a gap (14) extending above the transverse conveying device (6) in the transverse conveying direction (Q), **characterized by** a gap covering device (13) which has at least one circulating covering means (15) which is guided on the gap (14) in such a way that a section of the covering means (15) extending above the gap (14) is arranged to rest on the floor (5) in a height-adjustable manner, covering the gap (14) from above, and a section of the covering means (15) located below the gap (14) in return is guided to run back under the carriage (7) in circulation, wherein the height-adjustable lifting means (8) is designed to lift the section of the covering means (15) extending above the gap (14) in order to lift it upwards away from the floor (5), so that a pallet (3) positioned above this raised section of the covering means (15) is lifted by the lifting means (8) resting on the section of the covering means (15) extending above the gap (14).

2. Floor slab foundation system according to claim 1, **characterized in that** the covering means (15) has a plurality of cover plates (15a) which are arranged in series one behind the other on at least one circulating traction means (16) and are guided on the traction means (16) in such a way, that the cover plates (15a), which are each located in an upper run of the traction means (16), rest on the floor (5) in a height-adjustable manner, covering the gap (14) from above, and the cover plates (15a), which are each located in the lower run of the traction means (16), are located below the carriage (7) in return, wherein the height-adjustable lifting means (8) is designed to lift several of the cover plates (15a) located in the upper run of the traction means (16) in order to lift them upwards away from the floor (5), so that a pallet (3) positioned above the cover plates (15a) located in the upper run of the traction means (16) is lifted by the lifting means (8) while resting on these cover plates (15a).

3. Floor slab foundation system according to claim 2, **characterized in that** the gap covering device (13) has at least one deflection roller (17) at opposite end regions of the gap (14), on which deflection rollers (17) the traction means (16) is guided in circulation, so that during a circulating movement of the traction means (16), the cover plates (15) located in the section of the upper run of the traction means (16) move along the gap (14) in the transverse conveying direction (Q), while they continue to cover the gap (14).

4. Floor slab foundation system according to claim 2 or 3, **characterized in that** the cover plates (15a) are mounted and/or fastened to the traction means (16) in such a way that the cover plates (15a) resting on the floor (5) lie flush against one another at their end faces in the section of the upper run in order to completely cover the gap (14).

5. Floor slab foundation system according to one of claims 2 to 4, **characterized in that** each cover plate (15a) is fastened to the traction means (16) by means of at least one lug (18).

6. Floor slab foundation system according to one of claims 2 to 5, **characterized in that** the gap covering device (13) comprises two traction means (16) which are mounted so as to extend parallel to one another and each cover panel (15a) is mounted and/or fastened both to the one tension means (16) and to the other tension means (16).

7. Floor slab foundation system according to claim 1, **characterized in that** the covering means (15) is formed by a circulating flat strip (15b), which on the one hand has a flat strip section running above the gap (14), which covers the gap (14) from above, and on the other hand has a flat strip section running back under the carriage (7) in circulation, the traction means being formed by the flat strip (15b) itself in a functionally unifying manner.

8. Floor slab foundation system according to one of claims 1 to 7, **characterized in that** the traction means (16) is guided exclusively on non-driven deflection rollers (17).

9. Floor slab foundation system according to one of claims 1 to 8, **characterized in that** the traction means (16) is guided spring-biased on the deflection rollers (17), **in that** at least one of the deflection rollers (17) is mounted adjustably in the traction direction of the traction means (16) and the deflection roller (17) is biased against the traction direction of the traction means (16) by means of a spring (20) engaging on a bearing seat (19) of the deflection roller (17).

10. Floor slab foundation system according to one of claims 1 to 9, **characterized in that** the gap covering device (13) has, at opposite end regions of the gap (14), an upper deflection roller (17.1) and a lower deflection roller (17.2), on which four deflection rollers (17.1, 17.2) the traction means (16) is guided in circulation, wherein the two upper deflection rollers (17.1) are mounted separately from the two lower deflection rollers (17.2) so as to be adjustable and/or pretensionable relative to one another.

11. Floor slab foundation system according to one of claims 1 to 10, **characterized in that** the carriage (7) has a drive (10) which is designed to move the carriage (7) automatically in the transverse conveying direction (Q) and the driven carriage (7) drives the covering means (15) together with the at least one traction means (16) when the lifting means (8) presses against the rear sides of the covering means (15) in order to lift the latter.

12. Floor slab foundation system according to one of claims 1 to 11, **characterized in that** the lifting means (8) comprises a lifting blade which is mounted so as to be vertically adjustable between a storage position and an operating position and which has an upper edge extending in the transverse conveying direction (Q) which, in the operating position of the lifting blade, presses against the rear side of the covering means (15) in order to lift the latter.

13. Floor slab foundation system according to one of claims 1 to 12, **characterized in that** the carriage (7) has a lifting drive (21) which is designed to automatically move the lifting means (8) between a storage position, in which the lifting means (8) is moved back into the carriage (7) so that the lifting means (8) has no contact with the covering means (15), and an operating position, in which the lifting means (8) presses against the rear side of the covering means (15) in order to lift the latter.

14. Floor slab foundation system according to claim 13, **characterized in that** the lifting drive (21) comprises at least one hydraulic cylinder, at least one pneumatic cylinder and/or at least one electric lifting drive means, which is designed to raise and/or lower the lifting means (8).

15. Floor slab foundation system according to one of claims 1 to 14, **characterized in that** the lifting mobility of the covering means (15) relative to the floor (5) results from the play of the covering means (15) in the section above the gap (14).

16. Floor slab foundation system according to one of claims 1 to 15, **characterized in that** the traction means (16) is a chain (16a), a belt, a toothed belt, a flat belt (15b) or a rope.

## Revendications

1. Système de fondation de plaques de sol pour des installations de production avec des palettes (3) à transporter, en particulier installation de circulation de palettes pour la fabrication d'éléments de construction en béton préfabriqué, présentant au moins un dispositif de transport longitudinal (2), avec plusieurs galets de roulement (4) transportant les palettes (3) dans la direction de transport longitudinal (L), qui dépassent vers le haut d'un sol (5) uniquement dans des sections partielles de chaque galet de roulement (4), et présentant au moins un dispositif de transport transversal (6) disposé sous le sol (5) avec un chariot (7) transportant une palette (3) respective dans la direction de transport transversale (Q) et un moyen de levage (8) disposé de manière réglable en hauteur sur le chariot (7) pour soulever la palette (3) respective à recevoir pour le transport dans la direction de transport transversale (Q), le sol (5) présentant une fente (14) s'étendant au-dessus du dispositif de transport transversal (6) dans la direction de transport transversale (Q), **caractérisé par** un dispositif de recouvrement de fente (13) qui présente au moins un moyen de recouvrement (15) circulant qui est guidé sur la fente (14) de telle sorte qu'une section du moyen de recouvrement (15) s'étendant au-dessus de la fente (14) est disposée en appui sur le sol (5) de manière réglable en hauteur en recouvrant la fente (14) par le haut et qu'une section du moyen de recouvrement (15) se trouvant en retour au-dessous de la fente (14) est guidée en retour en circulation sous le chariot (7), le moyen de levage (8) réglable en hauteur étant conçu pour soulever la section du moyen de recouvrement (15) s'étendant au-dessus de la fente (14), afin de la soulever vers le haut en s'éloignant du sol (5), de sorte qu'une palette (3) positionnée au-dessus de cette section soulevée du moyen de recouvrement (15) est soulevée par le moyen de levage (8) en reposant sur la section du moyen de recouvrement (15) s'étendant au-dessus de la fente (14).

2. Système de fondation à plaques de sol selon la revendication 1, **caractérisé en ce que** le moyen de recouvrement (15) présente plusieurs plaques de recouvrement (15a) disposées en série les unes derrière les autres sur au moins un moyen de traction (16) circulant, qui sont guidées sur le moyen de traction (16) de telle manière, que les plaques de recouvrement (15a) se trouvant respectivement dans un brin supérieur du moyen de traction (16) reposent sur le sol (5) de manière réglable en hauteur en recouvrant la fente (14) par le haut et que les plaques de recouvrement (15a) se trouvant respectivement dans le brin inférieur du moyen de traction (16) se trouvent en retour en dessous du chariot (7), le moyen de levage (8) réglable en hauteur étant conçu pour soulever plusieurs des plaques de recouvrement (15a) se trouvant dans le brin supérieur du moyen de traction (16), afin de les soulever vers le haut en s'éloignant du sol (5), de sorte qu'une palette (3) positionnée au-dessus des plaques de recouvrement (15a) qui se trouvant dans le brin supérieur du moyen de traction (16) est soulevée par le moyen de levage (8) en reposant sur ces plaques de recouvrement (15a).

3. Système de fondation à plaques de sol selon la revendication 2, **caractérisé en ce que** le dispositif de recouvrement de fente (13) présente, dans des zones d'extrémité opposées de la fente (14), respectivement au moins une poulie de renvoi (17), sur lesquelles poulies de renvoi (17) le moyen de traction (16) est guidé en circulation, de sorte que, lors d'un mouvement de circulation du moyen de traction (16), les plaques de recouvrement (15) se trouvant dans la section du brin supérieur du moyen de traction (16) se déplacent dans la direction de transport transversale (Q) le long de la fente (14), tout en continuant à recouvrir la fente (14).

4. Système de fondation à plaques de sol selon la revendication 2 ou 3, **caractérisé en ce que** les plaques de recouvrement (15a) sont logées et/ou fixées sur le moyen de traction (16) de telle sorte que les plaques de recouvrement (15a) reposant sur le sol (5) sont alignées frontalement les unes contre les autres dans la section du brin supérieur afin de recouvrir complètement la fente (14).

5. Système de fondation à plaques de sol selon l'une des revendications 2 à 4, **caractérisé en ce que** chaque plaque de couverture (15a) est fixée au moyen de traction (16) au moyen d'au moins une éclisse (18).

6. Système de fondation à plaques de sol selon l'une des revendications 2 à 5, **caractérisé en ce que** le dispositif de recouvrement de fente (13) comprend deux moyens de traction (16) qui sont montés parallèlement l'un à l'autre et chaque plaque de recouvrement (15a) est montée et/ou fixée à la fois sur l'un des moyens de traction (16) et sur l'autre moyen de traction (16).

7. Système de fondation à plaques de sol selon la revendication 1, **caractérisé en ce que** le moyen de recouvrement (15) est formé par une bande plate (15b) en circulation, qui présente d'une part une section de bande plate s'étendant au-dessus de la fente (14), qui recouvre la fente (14) par le haut, et d'autre part une section de bande plate guidée en retour en circulation sous le chariot (7), le moyen de traction étant formé par la bande plate (15b) elle-même en réunissant les fonctions.

8. Système de fondation à plaques de sol selon l'une des revendications 1 à 7, **caractérisé en ce que** le moyen de traction (16) est guidé exclusivement par des poulies de renvoi (17) sans entraînement.

9. Système de fondation à plaques de sol selon l'une des revendications 1 à 8, **caractérisé en ce que** le moyen de traction (16) est guidé sous la précontrainte d'un ressort sur les poulies de renvoi (17), **en ce qu'**au moins l'une des poulies de renvoi (17) est montée de manière réglable dans la direction de traction du moyen de traction (16) et la poulie de renvoi (17) est précontrainte dans la direction opposée à la direction de traction du moyen de traction (16) au moyen d'un ressort (20) agissant sur un siège de palier (19) de la poulie de renvoi (17).

10. Système de fondation à plaques de sol selon l'une des revendications 1 à 9, **caractérisé en ce que** le dispositif de recouvrement de fente (13) comporte, dans des zones d'extrémité opposées de la fente (14), respectivement une poulie de renvoi supérieure (17.1) et une poulie de renvoi inférieure (17.2), sur lesquels quatre poulies de renvoi (17.1, 17.2) le moyen de traction (16) est guidé en circulation, les deux poulies de renvoi supérieures (17.1) étant logées de manière réglable et/ou précontrainte l'une par rapport à l'autre séparément des deux poulies de renvoi inférieures (17.2).

11. Système de fondation à plaques de sol selon l'une quelconque des revendications 1 à 10, **caractérisé en ce que** le chariot (7) comprend un dispositif d'entrainement (10) qui est conçu pour déplacer automatiquement le chariot (7) dans la direction de transport transversale (Q) et le chariot (7) entraîné entraîne le moyen de recouvrement (15) conjointement avec le au moins un moyen de traction (16) lorsque le moyen de levage (8) appuie contre les côtés arrière du moyen de recouvrement (15) afin de le soulever.

12. Système de fondation à plaques de sol selon l'une des revendications 1 à 11, **caractérisé en ce que** le moyen de levage (8) comprend une lame de levage montée réglable en hauteur entre une position de rangement et une position de service, qui présente un bord supérieur s'étendant dans la direction de transport transversale (Q), qui, dans la position de service de la lame de levage, appuie contre la face arrière du moyen de recouvrement (15) pour le soulever.

13. Système de fondation à plaques de sol selon l'une quelconque des revendications 1 à 12, **caractérisé en ce que** le chariot (7) comprend un entraînement de levage (21) qui est conçu pour déplacer automatiquement le moyen de levage (8) entre une position de rangement dans laquelle le moyen de levage (8) est ramené dans le chariot (7) de sorte que le moyen de levage (8) n'est pas en contact avec le moyen de recouvrement (15), et une position de service dans laquelle le moyen de levage (8) appuie contre l'arrière du moyen de recouvrement (15) pour le soulever.

14. Système de fondation à plaques de sol selon la revendication 13, **caractérisé en ce que** l'entraînement de levage (21) comprend au moins un vérin hydraulique, au moins un vérin pneumatique et/ou au moins un moyen d'entraînement de levage électrique, qui est conçu pour soulever et/ou abaisser le moyen de levage (8).

15. Système de fondation à plaques de sol selon l'une des revendications 1 à 14, **caractérisé en ce que** la mobilité en élévation du moyen de recouvrement (15) par rapport au sol (5) résulte du jeu du moyen de recouvrement (15) dans la partie située au-dessus de la fente (14).

16. Système de fondation à plaques de sol selon l'une quelconque des revendications 1 à 15, **caractérisé en ce que** le moyen de traction (16) est une chaîne (16a), une courroie, une courroie crantée, une bande plate (15b) ou un câble.
